# EUROPEAN PATENT SPECIFICATION

(11) **EP 2 892 225 B1**
(45) Date of publication and mention of the grant of the patent: **31.08.2022**
(21) Application number: 14150253.4
(22) Date of filing: 06.01.2014
(51) Int. Cl.: H04N 21/4147, H04N 21/472, H04N 21/6379, H04N 21/6405, H04N 5/765

(54) **Recording method, device and system**
Aufnahmeverfahren, -vorrichtung und -system
Procédé, appareil et système d'enregistrement

(43) Date of publication of application: 08.07.2015
(73) Proprietor: InterDigital CE Patent Holdings, SAS, 75017 Paris (FR)
(72) Inventor: Marti, Urs Viktor, Dr., 3053 Münchenbuchsee (CH); Vieceli, Dario, 8102 Oberengstringen (CH)
(74) Representative: AWA Sweden AB

(56) References cited:
- WO-A1-2007/136399
- US-A1- 2005 022 242
- US-A1- 2005 283 810
- US-A1- 2007 143 809
- US-A1- 2008 112 686

## Description

### TECHNICAL FIELD OF THE INVENTION

The present invention relates to the recording of media content transmitted over a network. In particular, but not exclusively, the invention relates to one-to-many transmission of data over a network, also known as multicasting, in which end-user devices can be configured to record a multicast item for future playback.

### BACKGROUND OF THE INVENTION

Multicasting involves the transmission of data, such as a video or audio sequence, to multiple receiving devices simultaneously in a single transmission from the source. Multicasting systems may be used, for example, for transmitting live TV via a network to many end-users. Copies of the data may be automatically created in other network elements, such as routers, if the topology of the network requires it. These copies are transmitted to devices further downstream in network simultaneously, thereby effectively creating a hierarchy of multicasts of the same data, and thereby decentralising the network traffic.

Multicasting may be implemented in Internet Protocol (IP) applications for streaming media or internet television (IPTV). In IP multicasting, the implementation of the multicast concept typically occurs at the IP routing level, where routers create distribution paths for conveying data packets from the storage device to each multicast destination address.

End-user devices for rendering multicast program content may include a wide variety of devices such as set-top boxes (STB), digital video recorders (DVR), personal computers (PC), laptop computers, tablet computers, mobile handsets, mp3 players etc. Many of these are capable of recording the content received in real-time for subsequent playback at a later time. However, there may not be sufficient bandwidth in the network connection to the end-user's device to permit the end-user to record one program while watching another, for example, or to record programs from two or more channels simultaneously. It has therefore been proposed to make program storage available in an intermediate recording server in the network, so that program content which cannot be recorded in real time by the end-user's device can be downloaded to the end-user's device later. In international application WO2007/136399 A1, an IPTV system is described in which programs which the end-user wishes to record for future viewing can be streamed at a lower data rate than the real-time transmission rate, thus leaving more bandwidth available for other data traffic. This system relies on the use of intermediate recording servers and imposes requirements on the functionality and storage capacity of these servers.

United States patent application US2012/0131622 A1 describes a method of distributing real-time and non-real-time content using a hierarchical storage network arrangement to store the non-real-time content. Network congestion is monitored, and non-real-time program content is transmitted to end-users' devices during times when the network is idle. Such prior art systems are relatively complex, inflexible and require significant coordination and communication of information around the network in order for them to function effectively.

US2005/283810 A1 describes a system wherein an interactive television program guide running on a Set-Top-Box allows the selection of programs to be recorded either on a local media server at user's home or on a remote media server.

US2007/143809 A1 describes a distributed recording system in which programmes are multicast from video hub offices (VHO) via intermediate and central (CO) offices to subscribers. The VHO has a recording server (DVR server) for recording programmes on behalf of users that interact with it through their Set-To-Boxes.

US2008/112686 A1 describes a building network structure interconnecting a plurality of DVRs, such that when a program being recorded by one of the DVRs runs beyond its allotted time and the storage space of the DVR becomes full, then the system determines if storage space is available on another networked DVR, and if so, the recording is continued on that unit.

### BRIEF DESCRIPTION OF THE INVENTION

An aim of the present invention is to overcome at least some of the disadvantages of prior art systems. To this end, the invention foresees a recording method as set out in claim 1 and a recording device as set out in claim 12. Further variants of the invention are set out in the dependent claims 2 to 11 and 13 to 18. Other aims of the invention may include reducing network traffic and storage overhead required for the delivery of media content, and improving multicast recording performance by giving each device in the network greater degree of autonomy than prior art devices, thereby permitting a reduction in the complexity of the storage coordination required across the network. Furthermore, these advantages may be provided without sacrificing the end-user's experience of real-time recording of media content. The method, device and system described here may exploit the advantages of both network-based storage and local storage, and may thereby reduce the number of requests for individual transmission signals going through the network to the source media content server.

Although the examples described in this text relate to multicasting, for example of audio or video content, it should be understood that the invention can also be used in any application in which data of any type is bundled or packaged for simultaneous transfer to more than one recipient device.

References to a network should be understood to encompass any kind of interconnection arrangement of data processing, routing, receiving or transmitting devices. A network may comprise electrical, optical or wireless connections in any constellation. The concept of a hierarchical network described and/or illustrated in this text does not imply an exclusively hierarchical connectivity; in particular, it does not imply any restriction on the communication links between any network devices in the network. References to a device should not be taken as an indication of any particular kind of physical structure - a device may comprise discrete, but interconnected, modules, for example, or may be implemented partially or entirely as software or firmware running on a computer or dedicated electronic device, or embedded on a data carrier or integrated circuit. References to "media" or "content" should be understood to include audio data, video data, live IP streams, webinars, file-sharing, image data, for example. The term "real-time" is used in this text to refer to the end-user's experience of the timing of content delivery, and does not imply that content is received at exactly the time of transmission. In particular, the concept of real-time allows for a margin of time-shifting across the network which may be due to data-processing techniques such as routing, buffering or caching, or physical processes in the data transmission.

### DETAILED DESCRIPTION OF THE INVENTION

The invention will now be described in more detail with reference to the attached drawings, in which:
Figure 1 shows in schematic view a media content transmission network.
Figure 2 shows in schematic view an example of a recording management system according to the invention.
Figures 3 to 5 illustrate an example of a timeline of a media content transmission.
Figure 6 shows a schematic view of a recording device according to the invention.
Figure 7 illustrates how multiple recording devices according to an embodiment of the invention may be combined in a network arrangement.
Figures 8 and 9 show an example of a pointer scheme which may be used in a variant of the invention.

The drawings are provided for illustrative purposes only, as an aid to understanding certain principles underlying the invention. They should not be taken as limiting the scope of protection sought. Where the same reference numerals have been used in different figures, these are intended to refer to the same or corresponding features. However, the use of different reference numerals does not necessarily indicate the existence of a difference between the features to which the numerals refer.

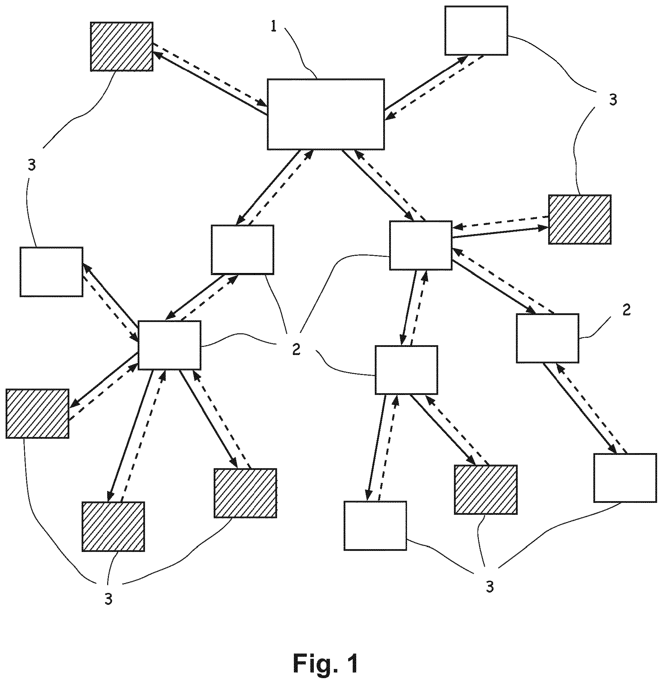

Figure 1 shows, in greatly simplified form, a schematic representation of a network, such as an internet protocol (IP) network, which may be used to transmit multicast transmissions of IP television programs, for example. The network illustrated may also be operable to transmit unicast or broadcast transmissions if required. In the highly simplified example shown, a source media content server 1 transmits a media content such as a TV programme to many end-user devices 3. The transmission across the network from the source media content server 1 to the end-user devices 3 may be via intermediate media content servers 2. In the case of a multicast transmission, the transmission of the media content to certain groups of end-user devices 3 may be delegated to intermediate media content servers 2 in hierarchical fashion, thereby reducing the data traffic from the source media content server 1. Each end-user device 3 may request media content by sending a media content request (indicated by dashed arrowed lines in figure 1) to its associated upstream media content server 2. Media content delivery routes are indicated by solid arrowed lines in figure 1. In this example, certain devices which have requested a particular media content are indicated by a shading. If an intermediate content server 2 has received a media content request from one or more downstream devices 3, the intermediate media content server 2 in turn sends an upstream media content request to a further upstream media content server 2, and eventually to the source media content server 1. The media content is then distributed, at the scheduled transmission time, from source media content server 1 via intermediate media content servers 2 to end-user devices 3.

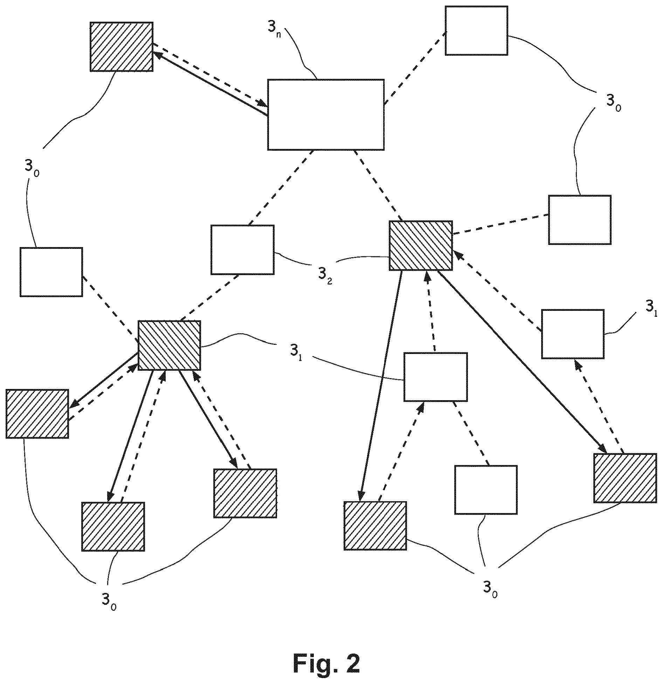

Some or all of the end-user devices 3 of figure 1 may comprise a recording device suitable for recording the media content received over the network from the source media server 1 via one or more intermediate media content servers 2. The present text describes how such end-user recording devices 3 may be provided with upstream recording devices to which the recording devices 3 may delegate all or part of a recording task if, for example, the end-user recording device 3 is not able to perform the recording task. The upstream recording function may advantageously be provided by the intermediate media content servers 2, since these may in any case receive the media content to be recorded. Alternatively, the upstream recording function may be provided by separate upstream recording devices. The generic case, which includes both alternatives, is discussed with respect to figure 2.

Figure 2 shows a similar network to that of figure 1. Figure 2, however, rather than showing the transmission of media content across the network, shows how the elements in the network hierarchy can be operated to record the transmitted media content during the scheduled transmission time. Figure 2 shows multiple recording devices 3₀, which may correspond to the end-user devices 3 of figure 1, and may be configured to request and receive a media transmission from the source media content server 1 of figure 1. Each of the recording devices 3₀ of figure 2 is shown connected to an upstream recording device (3₁, 3₂, 3ₙ) further upstream in the hierarchy of the network. The upstream recording devices may advantageously be the intermediate media content server devices 2 of figure 1, or they may be separate devices on the network.

A full-content recording device 3ₙ is also shown, which may record all of the media content which was transmitted to the recording devices 3₀, also referred to as requesting devices, shown shaded in figure 2. The full-content recording device 3ₙ may advantageously be the source media content server 1 described with reference to figure 1.

Each of the recording devices 30 may be instructed (by an end-user, for example) to record a media transmission, such as a TV programme, which is scheduled to be transmitted over the network by the source media content server 1 at a scheduled transmission time. However, it may be that one or more of the recording devices 30 is unable to record the transmitted media content at the scheduled transmission time, for example if the end-user has instructed the recording device to record multiple programmes on different channels at the same time and in a high definition format; in this case the network bandwidth and/or the the recording device's storage may be insufficient to record all of the requested TV programmes as they are being transmitted. If this situation arises, then the recording device 3₀ may delegate the task of recording the requested programme to an upstream recording device 3₁, higher up the hierarchy.

If it happens that the upstream recording device 3₁ does not carry out the delegated recording as instructed by the downstream recording device 30, then the upstream recording device 3₁ may in turn delegate all or part of the recording task to a further upstream recording device 3₂. If necessary, the sequence of upstream delegation of recording may continue until it encounters a full-content recording device 3ₙ which contains the full recording of the media content, at which point no further upstream delegation is necessary. In the example arrangement shown in figure 2, the full-content recording device 3ₙ, which stores substantially all of the transmitted media content after it has been transmitted, may be the source media content server 1 of figure 1.

Thus it may happen that, when a user instructs his recording device to record a particular TV programme which is scheduled to be transmitted between 21:30 and 22:30, and a second TV programme starting at 22:00 and finishing at 23:00, then the user's recording device 3₀ may instruct an upstream recording device 3₁ to record the second programme from 22:00 until 22:30. This upstream delegation of the recording is transparent to the user; from his point of view, the recording has been carried out by his local recording device 30. At some point, the user may wish to view the recorded second programme, in which case the first half-hour of the recording may be retrieved from the upstream recording device 3₁, while the second half-hour of the recording is retrieved from the recording storage of the local recording device 30. The retrieval of the different parts of the recording from different recording devices is transparent to the user.

The term "upstream recording device" is used in this text to refer to a device which acts as a proxy recording device for a downstream recording device. An upstream recording device may be an intermediate network device 3₁ or 32 in the hierarchy, or it may be the source media content server 1 described earlier. The term "downstream device" is used in this text to refer to a recording device which is capable of deferring or delegating to an upstream recording device the task of recording media content transmitted from the source media content server 1. A downstream device may be an end-user device such as an STB, a PC, a DVR or a smartphone, as mentioned earlier, or it may itself be an intermediate network device 3₁, 3₂, in which case it may function as both a downstream device and an upstream device. In figure 2, some of the recording devices (3₀) are shown with an upstream recording device which is the full-content recording device 3ₙ, in which the full media content is stored. Other recording devices 3₀ have upstream recording devices 3₁, 3₂ which are intermediate in the network hierarchy. In each case, the end-user device 3₀ is provided with access to an upstream recording device via an upstream record instruction connection, by means of which a downstream recording device may instruct an upstream recording device to record all or part of a requested media content. The upstream/downstream associations are denoted in figure 2 by dashed lines. Actual upstream recording instructions are represented by arrowed dotted lines. Subsequent downstream transmission of recorded media content which has been recorded upstream is indicated by solid arrowed lines.

Note that the network depicted in figure 2 has a hierarchical structure which relates to the recording of the transmitted media content transmitted from source media content server 1, and not necessarily to the network used for the transmission itself. The network structure for the content transmission was described with reference to figure 1, and may be the same as the network arrangement for the recording management a shown in figure 2, or it may be different. For the purposes of this text it can be assumed that a transmission network is present, even if not illustrated.

In a multicast transmission, only a subset of the end-user devices 3₀, such as those shown shaded in figure 2, request delivery of the media content transmitted across the network at a scheduled transmission time. These requests may be made in order to view the media content transmission at the time of transmission, or to record the media content for later playback at the respective end-user device 3₀. In such an example multicast situation, the media content would normally be transmitted to all the requesting (shaded) end-user devices 3₀ from the source media content server 1, or from intermediate media content servers 3₁, 3₂.

If an end-user programs a recording in his recording device 3₀ (for example an STB, DVR, PC, mobile phone etc), the recording may be made locally in the end-user's recording device 3₀ or, if conditions (for example the available bandwidth on the transmission network, the storage capacity of the recording device and/or the image quality requested by the end-user) are such that local recording is not possible or inconvenient, the recording device 3₀ may instruct an upstream recording device 3₁ or 3₂ to record some or all of the media content during the transmission period.

The upstream recording device 3₁, 3₂ may advantageously be an intermediate media content server 2, as described with reference to figure 1, which aggregates and manages media content transmission to multiple downstream devices, or it may be a different device.

Copies of the transmitted media content may be made at multiple locations in the network. In a multicast system, the content may in any case be recorded in the full-content recording device 3ₙ (at least for a limited time, such as a week), which ensures that the recording will be available to all end-users who requested it, even if the requested content was not recorded on their local recording device 3₀ at the time of transmission. In an IPTV system, all channels are typically recorded all the time in the source media content server, so that each recording is always available centrally. The source media content server may be configured to store a "sliding window" of (eg 24 hours or 7 days) of transmitted content, to ensure that the end-users' recording requests can be fulfilled during the specified period.

In the case where the program content is to be recorded at the end-user's device 3₀, a real-time delivery of the media content is not strictly required, since the purpose of a recording is that it will be viewed at a later time. Nevertheless, the end-user's experience of the recording system is enhanced if he or she retains the impression that the recording is being carried out in real time, and that the requested media content is locally recorded and available to play back.

The term "recording device" used in this text is not limited to recording devices operable by an end-user, but may also refer to device, such as intermediate network devices, where media content may be recorded for subsequent off-loading to devices further downstream.

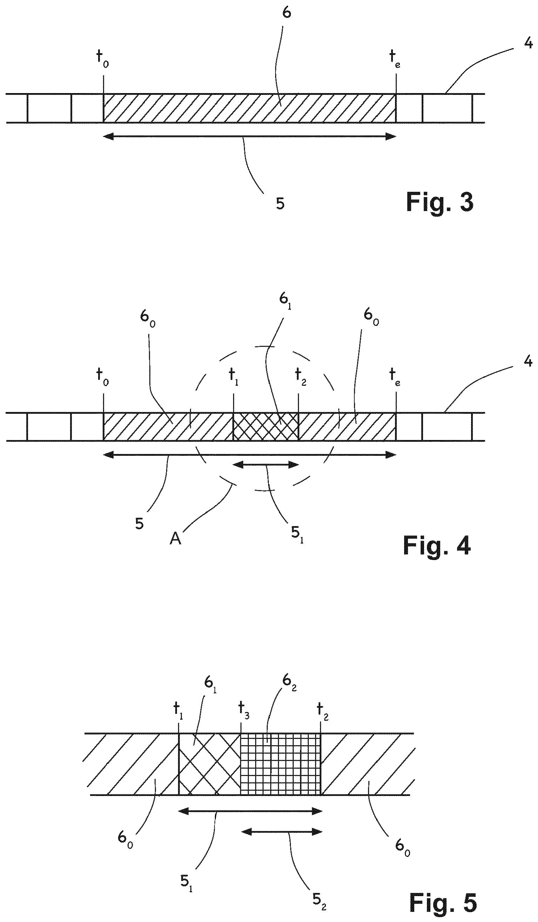

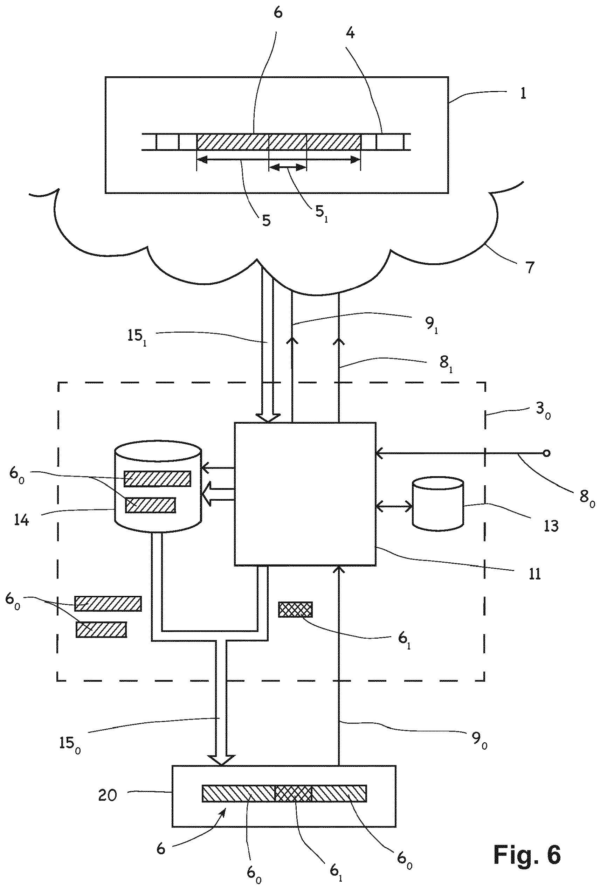

Figure 3 shows a simple timeline representation of the broadcast of a program content 6. In an ongoing transmission 4, the transmitted program 6 begins at time t₀ and ends at time tₑ, with a transmission period (tₑ - t₀) indicated by reference 5. This example will be used to illustrate the functioning of the device illustrated in figure 6. The transmitted media content 6 is programmed to be recorded by a number of end-user devices 3₀ such as those shown shaded in figure 2. Thus, when the program 6 is broadcast, beginning at time t₀, it should be received and recorded by those end-user devices 3₀ which have been programmed to record it. In this case, the end-user devices 3₀ which have been programmed to record the media content 6 will receive the media content 6 and record it locally during the transmission period 5, for subsequent playback.

However, some of the end-user devices 3₀ which were programmed to record the transmitted media content 6 may not be able to record it during the scheduled transmission time 5, or they may not be able to record all of the media content 6 at the time it is transmitted. By way of example, we will assume that an end-user device is not able to record the program broadcast during a part 5₁ of the transmission period 5, as illustrated in figure 4. The part 5₁ begins at a time t₁ and ends at a time t₂. In this example, the user's recording device 3₀ is able to record the first and last portions 6₀ of the transmitted media content 6 during the scheduled transmission period 5. This timeline example only illustrates a case in which one portion 6₁ of the program is not recorded at the scheduled time by recording device 3₀. However, it should be understood that the recording method and device of the invention may be used in situations in which there are multiple portions 6₁ of the media content 6 which the recording device 3₀ does not record at the scheduled transmission time. Indeed, it may be that the recording device 3₀ does not record any of the media content 6 during the scheduled transmission time, and delegates the task of recording the media content 6 for the whole of the scheduled transmission period.

Figure 5 shows an enlargement of the section A of figure 4, and depicts a timeline corresponding to a situation in which the upstream recording device 3₁ further delegates the task of the recording of the media content 6 to a second upstream recording device (3₂ in figure 2) for the portion of the transmission period identified in figure 5 by the reference 5₂, and beginning at time t₃.

Figure 6 uses the simple timeline example of figures 3 to 5 to illustrate an example of a recording device for implementing the principles underlying the invention.

In this example, a recording device indicated by dotted line 3₀ is arranged to record program content 6 transmitted during a transmission period 5 by source media content server 1 across a network 7 such as the internet. This example may represent, for example, an end-user's recording device 3₀, in which case it may then be arranged to output recorded media content data to a rendering device 20, which might be a television, for example, or a viewing application of a computer or mobile phone.

However, as will be described later in this text, an embodiment of the invention foresees that the recording device arrangement illustrated in figure 6 may be itself be an intermediate device in a network, located between an upstream device and a downstream device. For this reason, the following description is generalised beyond the specific case where the recording device 3₀ is an end-user device for local recording and play-back of a recorded program.

The illustrated recording device 3₀ in figure 6 comprises a recording controller 11, a local content storage 14 and a recording mapping storage 13. Local content storage 14 may be used for storing media content received from the source media content server 1, for example.

If the recording controller 11 receives a record instruction signal 8₀ instructing the recording device 3₀ to record media content 6 during the scheduled transmission time 5, the recording controller 11 then determines whether the media content 6 should be recorded locally, or partly locally, or whether the recording of media content 6 should be delegated to an upstream recording device (not shown in figure 6). Following the timeline example of figures 3 to 5, the recording controller 11 determines that a part 6₁ of the media content 6 transmitted during transmission period 5₁ should be recorded upstream, while the remainder 6₀ of the media content should be recorded locally. The parameters which are taken into account by the recording controller when determining whether or not to delegate the recording of part or all of the media content 6 to an upstream device 3₁ will be described in more details below.

Note that, although the various connections to the recording device 3₀ are shown as distinct connections in figure 6, this is merely for ease of understanding, and they may be implemented in any convenient manner - for example as one or more communication protocols on the same (wired and/or wireless) connection(s) in any combination.

The local content storage 14 and recording mapping storage 13 may be integral or external to the recording device 3₀. The term local is used merely to indicate that the storage can be written to and read from under control of the recording device 3₀.

The function of the recording controller 11 is determined by a recording status parameter (or more than one recording status parameter), which determines whether, or to what extent, a particular scheduled media content transmission 5 is to be recorded in the local content storage 14 of the recording device 3₀. The recording status parameter(s) may represent current conditions of the recording device 3₀ which may include, for example, one or more of: a bandwidth availability between an upstream media content server 1, 2 and the recording device 3₀; a processing capacity of the recording device 3₀; a local storage availability of the local content storage 14; or a recording preference provided by an end-user or a network provider.

At or before the start time t₀ of the scheduled transmission period 5 of the requested media content 6, the recording controller 11 determines a value of the recording status parameter(s) and, if the recording status parameter has a value which indicates that local recording is possible or convenient, starts to record the transmitted media content 6 in the local storage 14, as the content is received by the recording device 3₀. If the recording status parameter(s) remain unchanged during the broadcast period 5, then the full media content 6 is recorded in the local storage 14.

However, if the recording status parameter is such that the task of recording the transmitted media content 6 should be delegated upstream (at time t₁ in figure 4, for example), then the recording controller 11 may halt recording of the media content data 6 in the local storage 14, and the recording is carried out by an upstream recording device 3₁ (not shown in figure 6). If the recording status parameter subsequently changes again (at time t₂ in figure 4, for example) so as to indicate that local recording by recording device 3₀ may recommence, then the recording controller 11 starts recording the received media content 6 in local storage 14 once more.

In this example (in which a part 6₁ of the content 6 is omitted from local storage 14), the recording then continues until the end tₑ of the real-time broadcast period 5 of the requested media content 6. At this point, two portions, labelled 6₀, of the program 6 have been recorded in local storage 14, and an upstream recording device 3₁ (not shown) has been instructed to record the omitted part-recording 6₁. Thus, part-recording 6₁ should now be have been recorded in the storage of the upstream recording device 3₁. The parts 6₀ and 6₁ may be any length, from zero to the full length of the program 6.

If the recording function was delegated upstream during parts 5₁, 5₂ of the transmission period, as described above, then the recording device 3₀ is dependent on access to the upstream recording device 3₁ for supplying the parts 6₁, 6₂ of the media content 6 which were recorded by the upstream recording device 3₁, 3₂.

In this case the recording device 3₀ can advantageously record a low-resolution or sampled version of the media content 6 during the parts 5₁, 5₂ of the transmission period which are delegated to the upstream recording device(s) 3₁, 3₂.

According to a variant of the invention, therefore, the parts 6₁, 6₂ of the media content 6 which could be omitted from the local storage 14 because they are recorded by an upstream recording device 3₁, 3₂ etc. may nevertheless be partially recorded (eg recorded at low resolution) in the local storage of the recording device 3₀.

If the recording status parameter indicates that there is not enough network bandwidth and/or storage capacity available to the recording device 3₀ for it to be able to record the media content transmission at full resolution during parts 5₁ of the transmission period 5, it may still be possible to record those parts 5₁ at a lower resolution, for example. In this case, locally recorded content 60 can then be played back in high resolution, for example, while upstream-recorded content 5₁ is still locally available at a lower resolution for offline playback. This variant has advantages for devices which are not constantly connected to the relevant network (eg the internet), such as a mobile or handheld device, and which may not have constant access to the upstream device 3₁ after the transmission time of the upstream-recorded media content 6₀. Instead of an incomplete recording with gaps, then, the recording device 3₀ according to this variant would at least be able to play back recording of the full transmission period 5, albeit with parts 5₁ only played back at a lower resolution. This variant may also be deployed in the first upstream recording device 3₁ which is instructed by the recording device 3₀ to record the media content transmission 6 during parts 5₁ of the scheduled transmission period 5, in that portions 5₂ which are delegated further upstream to a second upstream recording device 3₂ may nevertheless be sampled or recorded in low resolution by the first upstream recording device 3₁. Such locally sampled or low-resolution media content may also be useful when performing rapid scanning through the media content recording during playback, for example.

When an end-user subsequently requests playback of the recorded media content 6, for using media content request 9₀, the recording controller 11 retrieves the first locally recorded portion 6₀ of the media content 6 from the local storage 14 and delivers it to the playback device 20 via output connection 15₀. Before the end of the playback of the first locally recorded portion 6₀, the recording controller 11 issues an upstream media content request 9₁ to an upstream recording device 3₁ (not shown), requesting the omitted part 6₁ of the media content 6, and delivers it to the playback device. The changeover from locally recorded content 6₀ to upstream recorded content 6₁ may be arranged so that the switch is imperceptible to the end-user. While the locally omitted part 6₁ is being received from the upstream recording device 3₂ for playback on playback device 20, the recording controller 11 may, in dependence on the current recording status parameter, record the received portion 6₁ in the local storage, thereby achieving a complete (or at least a more complete) local recording of the media content 6 in the local storage 14.

If none of the media content 6 was recorded locally during the schedules transmission period, it will all need to be requested from an upstream recording device 3₁. The subsequent transmission of the media content may be performed as a unicast transmission to the recording device 3₀, or, if multiple recording devices 3₀ request media content 6 via the same upstream recording device 3₁, then the upstream recording device 3₁ may transmit the media content 6 to the multiple downstream recording devices 3₀ at the same time. This transmission may itself constitute a multicast transmission, or a simple broadcast, for example.

The recording controller 11 may be configured so that, if the recording status parameter(s) indicate that it is possible or convenient, the recording controller 11 can request subsequent transmission of one or more of the omitted content portion(s) 6₁ from the upstream device 3₁ at a time after the broadcast time of the omitted content portion(s) 6₁, thereby "filling in" the missing portions of the local recording, so that as much of the recorded content as possible is stored locally. This filling in operation may be performed during idle time of the network, for example.

In order to manage the various locally-recorded parts 6₀ and upstream-recorded parts 6₁ of a recording, the recording controller 11 may store reference information, referred to here as mapping pointers, in the recording mapping storage 13. Each mapping pointer comprises information about the identity of a content portion and location information about where the content portion can be retrieved from. It may also comprise continuity information indicating a previous content portion and/or a following content portion.

The recording mapping storage 13 may be local to the recording device 3₀, or it may be located externally to the recording device 3₀ (for example it may be held at the upstream device 3₁, or at another location where the mapping pointer information is writable and readable by the recording controller 11. Holding the recording mapping storage 13 remotely, for example elsewhere on the network, does not significantly add to the network traffic, since the amount of data which must be read from and written to the recording mapping storage 13 is small.

The recording controller 11 may also delete, overwrite or rearrange recordings in the local storage, for example in dependence on a recording priority parameter of the recordings. Such a parameter may be determined for example as a function of one or more of: an elapsed time since the beginning (t₀) of the broadcast period 5 of the recorded multicast 6; an elapsed time since the end (tₑ) of the broadcast period 5 of the recorded multicast 6; a playback probability of the recorded multicast 6, the playback probability being calculated in dependence on one or more playback patterns of previous recordings; a recording storage preference provided by an end-user or a network provider; the length of the recording; and a popularity parameter of the recorded multicast, received from the source media content server 1.

The recording status parameter and/or the priority request parameter may use a predictive data request forecast algorithm to optimally balance local memory requirements, anticipated network capacity (eg bandwidth) and local processing capacity. The predictive algorithm may be provided with a database of previous performance characteristics, and suitable heuristics for predicting the parameters mentioned. By balancing the resource usage in this way, it is possible to greatly optimise the network load and the usage of the system components, especially networking components.

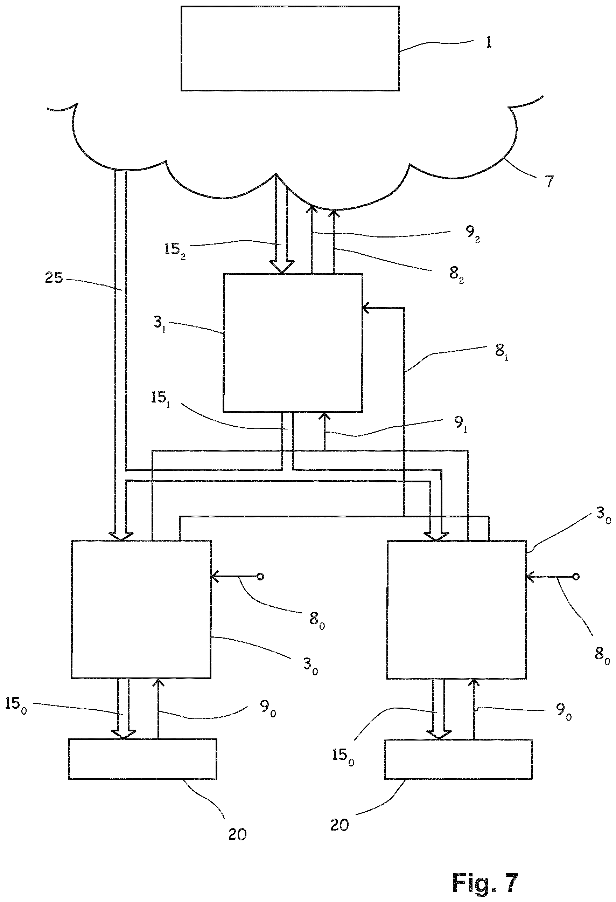

In the case where multicast content is transmitted from the source media content server to an end-user recording device 3₀ via one or more intermediate devices, for example, the intermediate device(s) may each be configured as an upstream recording device 3₁, 3₂ as described above and illustrated in figure 7. In this case, the intermediate device 3₁, 3₂ may "see" the source media content server as an upstream recording device (ie source of requested media content), and it may see the end-user recording device 3₀ as a downstream device to which content is to be transmitted (ie played back). The end-user device 3₀ then sees the intermediate device 3₁ as an upstream device. The end-user device 3₀ may also see the source media content server 1 as an upstream device. When recording media content 6, the end-user recording device 3₀ may record content supplied by the source media content server 1 via an intermediate device 3₁, 3₂, and/or it may record media content which is not available from the intermediate device 3₁, 3₂ directly from the source media content server 1.

Figure 7 shows an example of a networked arrangement of recording devices. Three instances of a recording device according to the invention are indicated by references 3₀ and 3₁, and their respective connections are labelled correspondingly. Recording device 3₀ functions as a downstream device for an upstream device 3₃ (not shown) and as an upstream device for the two recording devices 3₀. Each of the recording devices 3₀ functions as a downstream device for recording device 3₁ and as an upstream recording device for a downstream device 20, which may be a playback device, for example.

Such an arrangement may represent just one small part of a networked multicast transmission system which may extend indefinitely across the network, in which each recording device can receive, record and/or transmit data which cascades through the network. Filling of the local storages 14 of the recording devices may thus be carried out in a broadcast manner over multiple routes through the network. The characteristics of the devices' local storage 14 and/or processing components may vary. For example, they may be varied in order to balance the usage on the network, as mentioned above.

Recordings stored in the storage(s) of upstream recording devices 3₁, 3₂ may also be deleted or overwritten, in the same way as with end-user recording devices, for example if the probability of the content being requested becomes low, or if a higher-priority content must be stored in its place. A priority list for the recordings can be updated over time. Each recording request for a particular recording may have the effect of incrementing the retention priority for the particular recording, while each playback of the recording may decrement the priority. If the priority of a recording falls below a certain threshold (depending also on the storage capacity etc), the recording can be deleted or overwritten. It is possible to predict the capacity requirements of the intermediate storage according to the learned request and playback patterns. For example, it appears that most recorded media content is played back within three days or not at all. Thus, once a recording is more than three days old, its retention priority can be significantly reduced.

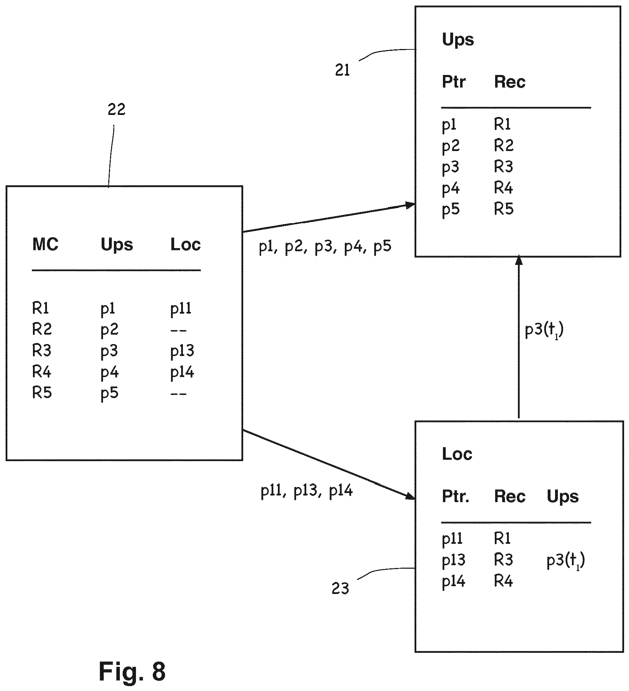

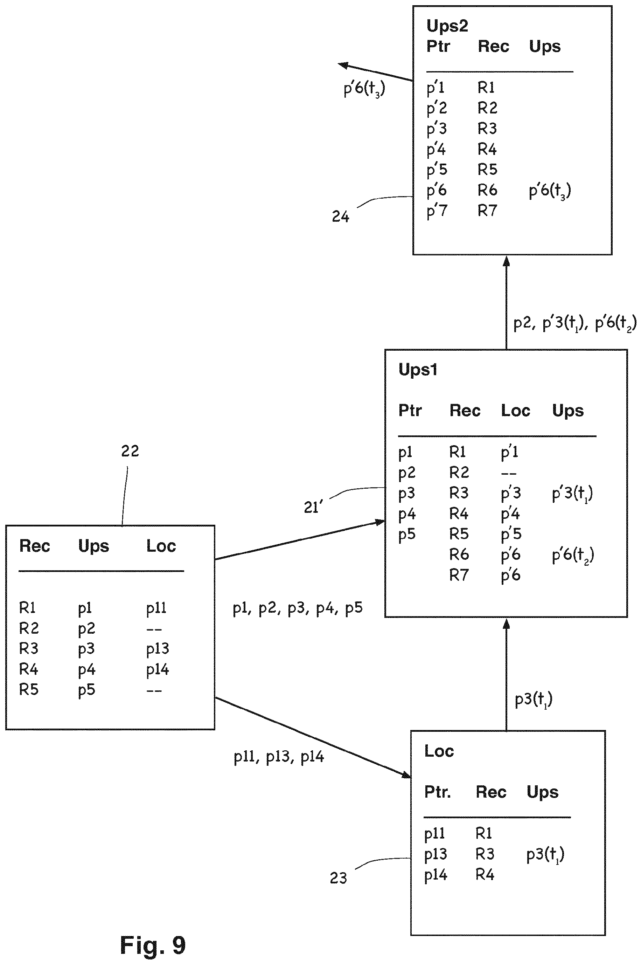

An example of a mapping pointer scheme is illustrated in figures 8 and 9. Note that this scheme is not intended to correspond to the example media content shown in figures 3 to 5. In figure 8, a recording table 22 contains information about five requested recordings R1 to R5. For each of these recordings, pointers p1, p2 etc are stored which indicate where the respective recording may be retrieved from. In the illustrated example, the stored pointers p1 - p5 indicate that all of the requested recordings R1 to R5 are available from the upstream device, and pointers p11, p13 and p14 indicated that three of the programs (R1, R3 and R4) are recorded in local storage 14. Supplementary recording table 23 contains more detailed information about the content stored in local storage 14 of the recording device 30. In this example, pointer p3(t₁) indicates that a part of recording R3 was omitted, and must be retrieved from the upstream device 3₁. If the end-user plays the recording R3, the playback content is initially retrieved from local storage 14. When it reaches the time t₁, the content retrieval switches to the upstream device 3₁, and the playback of recording R3 continued seamlessly.

The mapping pointer information (p1, p2, ...) may for example include: a portion start time value, identifying a real-time start time (t₀, t₁,t₂) of the particular part 6₀, 6₁ of the transmission period 5 of the media content; a portion end time value, identifying a real-time end time (t₁, t₂, tₑ) of the particular part 5₀, 5₁ of the transmission period 5; a portion duration, identifying a real-time duration (t₁ - t₀, t₂- t₁, tₑ - t₂) of the particular transmission period 5₀, 5₁; at least one first content portion address, identifying a first storage location of the start, the end and/or the extent of a local storage location of the particular first content part 6₀ stored in the local data storage 14; and/or at least one second content portion address, identifying a second storage location of the start, the end and/or the extent of a remote storage location of a particular second content part 6₁ in a remote data storage of the upstream recording device 3₁. In this text, the term "first content part" is used to describe part of the requested content which are recorded in the local storage 14 of the recording device, while "second content parts" are those recorded in the recording storage of an upstream recording device 3₁.

Note that the illustrated example in figure 8 shows a highly simplified example representation of mapping pointer arrangement. In a real-world implementation, it would be possible for recordings to be received from multiple upstream recording devices 3₁, and the pointer information could in this case also identify the respective upstream recording device 3₁, and potentially an alternative upstream recording device 3₁, where the recorded media content or part thereof can be retrieved. It would also be possible to record from multiple channels at once, and to play back content of programs which are still being recorded. In such cases, the mapping pointer configuration would be significantly more complicated than the illustrated example.

Figure 9 shows how the mapping pointers might appear in a hierarchical arrangement of recording devices as shown in figure 7. In the illustrated example, recordings R1 to R5 are requested by an end-user of one of the devices 3₀ of figure 7. Further recordings R6 and R7 are also available on the network, but have not been requested by this end-user recording device 3₀. Once the scheduled transmission times for R1 to R7 have passed, the various pointer tables may appear as in figure 9. Recording tables 22 and 23 are as in figure 8. Recording table 21', on the other hand, indicates that the recording R2 requested by recording device 3₀ is not recorded on recording device 3₁. Since it is located in the network between an upstream device 3₂ (not shown in figure 7) and (in this case two) downstream devices 3₀, the recording device 3₁ may be referred to as an intermediate recording server Ups1. Recording R3 was requested by recording device 3₀, but was only partially available on Ups1 (recording device 3₁). Also, recording R6, which was not requested by recording device 3₀, is only partially recorded Ups1 recording device 3₁. Therefore, the mapping table 21' of recording device 3₁ includes pointers p'3(t₁) and p'6(t₂) which point to the corresponding content portions on the Ups2 upstream recording device 3₂. In this case, the Ups2 upstream recording device 3₂ is in turn missing a portion of recording R6, so its recording table 24 in turn includes a pointer p'6(t₃) to a device 3₃ or 3ₙ (not illustrated) yet further upstream for this missing portion.

As explained above, if a requested media content portion is not available on an upstream recording device when it is requested, a further content request may be made to the next upstream recording device. If the requested media content portion is available at that next upstream recording device, the requested content can be streamed directly to the end-user's device (ie it does not need to pass through the hierarchy of intermediate devices). Alternatively, if enough requests are received for the content, the content can be transmitted downstream to the intermediate recording device or devices, from where it can be streamed to the multiple requesters, optionally in the form of a mini-multicast.

In such a network of devices according to the invention, it is possible to implement an intelligent combination of distributed network storage devices, each of which may have storage of different characteristics, such as memory capacity or speed of access, for example, with the aim of balancing or optimising memory requirements and thereby minimizing overall network traffic.

In a multicast transmission, it is advantageous to ensure that the media content is recorded as far down the network hierarchy from the source media content server as possible, in order to reduce the instances of repeated transmission of media content. The method described here ensures that each recording or part-recording, is recorded at the lowest plausible level in the hierarchy, and without the need for any significant system-level management of the recording locations.

In playback mode, the recorded portions are either available locally, or can be retrieved using locally available mapping pointer information, without the need for any significant system-level management of the recording portions.

## Claims

1. A method of recording a media content (6) transmitted across a network, during a scheduled transmission period (5) of the media content (6), the network comprising an upstream media server (1) and a hierarchical arrangement of recording devices (3₀ 3₁, 3₂, 3ₙ) capable of recording the transmitted media content (6), wherein the media content is transmitted from the upstream media content server (1) to a hierarchically downstream end-user recording device (3₀) wherein the method comprises:
a first step, in which the downstream end-user recording device (3₀) receives a record instruction (8₀) identifying the media content (6) and instructing the downstream end-user recording device (3₀) to record the media content (6) during the scheduled transmission period (5),
a second step, in which:
a recording controller (11) of the downstream end-user recording device (3₀) determines at or before the start time (t₀) of the scheduled transmission period, and subsequently during the recording operation, a recording status parameter of said downstream end-user recording device (3₀) wherein the recording status parameter represents current conditions of the downstream end-user recording device (3₀);
the downstream end-user recording device (3₀) generates, in dependence on the recording status parameter, a first upstream record instruction (8₁) identifying a first part (5₁) of the transmission period (5) to be recorded hierarchically upstream of the downstream end-user recording device;
the downstream end-user recording device (3₀) sends the first upstream record instruction (8₁) to a first hierarchically upstream recording device (3₁) of the downstream end-user recording device, wherein the first upstream record instruction (8₁) comprises identification information of the first part (5₁) of the transmission period (5) and an instruction to the first upstream recording device (3₁) to record the transmitted media content (6) during the first part (5₁) of the transmission period (5); and the current conditions represented by the recording status parameter comprise a recording storage availability of the end-user recording device (3₀).

2. A method according to claim 1, comprising a third step, in which the downstream end-user recording device (3₀) records the transmitted media content (6), at least during a second part (5₀) of the transmission period (5) which does not coincide with the first part (5₁) of the transmission period.

3. A method according to claim 1 or claim 2, comprising a fourth step, in which the first upstream recording device (3₁) receives the first upstream record instruction (8₁) from the downstream end-user recording device (3₀) and records the media content (6₁) transmitted during the first part (5₁) of the transmission period (5).

4. A method according to one of claims 1 to 3, comprising a fifth step, in which the first upstream recording device (3₁) sends a second upstream record instruction (8₂) to a second upstream recording device (3₂), upstream of the first upstream recording device, wherein the second upstream record instruction (8₂) comprises identification information of at least a portion (5₂) of the first part (5₁) of the transmission period (5), and an instruction to the second upstream recording device (3₂) to record the media content (6₂) transmitted during the portion (5₂) of the first part (5₁) of the transmission period (5).

5. A method according to one of claims 1 to 4, comprising a sixth step, in which the first (3₁) or second (3₂) upstream recording device, or a hierarchically further upstream recording device (3ₙ), or the upstream media content server (1), records all of the media content (6) transmitted during the scheduled transmission period (5).

6. A method according to one of claims 1 to 5, wherein the second step is a conditional step, performed in dependence on a first recording status parameter of the downstream end-user recording device (3₀), and/or wherein the fifth step is a conditional step performed in dependence on a second recording status parameter of the first upstream recording device (3₁).

7. A method according to one of claims 1 to 6, comprising a seventh step in which, at a first time, after the start time (t₁) of the first part (5₁) of the transmission period (5), the downstream end-user recording device (3₀) sends a first upstream content request (9₁) to the first upstream recording device (3₁), identifying a first media content recording (6₁) recorded during the first part (5₁) of the transmission period (5).

8. A method according to claim 7, comprising an eighth step in which, at a second time, after the start time (t₃) of the portion (5₂) of the first part (5₁) of the transmission period (5), the first upstream recording device (3₁) sends a second upstream content request (9₂) to the second upstream recording device (3₂, 3ₙ), identifying a second media content recording (6₂) recorded during the portion (5₂) of the first part (5₁) of the transmission period (5).

9. A method according to one of claims 7 and 8, comprising a ninth step, in which the first upstream recording device (3₁) transmits the first media content recording (6₁) to the downstream end-user recording device (3₀), and/or in which the second upstream recording device (3₂, 3ₙ) transmits the second media content recording (6₂) to the downstream end-user recording device (3₀).

10. A recording method (3) according to one of the preceding claims, comprising a tenth step, in which the downstream end-user recording device (3₀) and/or the first upstream recording device (3₁) and or the second upstream recording device (3₂) deletes or overwrites media content (6_{0,} 6_{1,} 6₂) recorded during the scheduled transmission period (5) in dependence on a recording priority parameter of the media content (6_{0,} 6_{1,} 6₂).

11. A recording method (3) according to claim 10, wherein the recording priority parameter of the recorded media content (6_{0,} 6_{1,} 6₂) is determined in dependence on one or more of:
an elapsed time since the beginning (t₀) of the transmission period (5) of the recorded media content (6),
an elapsed time since the end (tₑ) of the transmission period (5) of the recorded media content (6_{0,} 6_{1,} 6₂),
a playback probability parameter of the recorded media content (6₀, 6_{1,} 6₂), the
playback probability parameter being calculated in dependence on one or more historical playback patterns of previously recorded media contents,
a recording storage preference provided by a user or a network provider,
a duration parameter of the recorded media content (6_{0,} 6_{1,} 6₂),
and a popularity parameter of the recorded media content (6_{0,} 6_{1,} 6₂).

12. An end-user recording device (3₀) operable, as part of a hierarchical arrangement of recording devices, (3₀, 3₁, 3₂, 3ₙ), to record media content (6) transmitted during a scheduled transmission period (5) by an upstream media content server (1) of the hierarchy, wherein the hierarchically downstream end-user recording device (3₀) is operable to receive a first record instruction (8₀), instructing the downstream end-user recording device (₃₀) to record the media content (6) during the scheduled transmission period (5), the downstream end-user recording device (3₀) being **characterised by**:
determining, at or before the start time (t₀) of the scheduled transmission period, and subsequently during the recording operation, by means of a recording controller (11), a value of a recording status parameter of the downstream end-user recording device (3₀), wherein the recording status parameter represents current conditions of the downstream end-user recording device (3₀); and
generating, in dependence on the recording status parameter, an upstream record instruction (8₁) identifying a first part (5₁) of the transmission period (5) to be recorded upstream, and to transmit the upstream record instruction (8₁) to a first upstream recording device (3₁) of the hierarchy wherein the current conditions represented by the recording status parameter comprise a recording storage availability of the downstream end-user recording device (3₀).

13. A recording device according to claim 12, wherein the downstream end-user recording device (3₀) is operable to send a first upstream content request (9₁) to the first upstream recording device (3₁), the first upstream content request (9₁) identifying a first upstream recording (6₁) of the first media content (6₁) recorded during the first part (5₁) of the transmission period (5).

14. A recording device according to one of claims 12 or 13, wherein the downstream end-user recording device (3₀) is operable to store, in a mapping pointer storage (13, 22, 23) of the recording device, mapping pointer information (p1, p2, ...) identifying a retrieval location of the first upstream recording (6₁).

15. A recording system comprising one or more first downstream end-user recording devices according to
one of claims 12 to 14, and a second recording device according to one of claims 12 to 14, wherein the second recording device is the first upstream recording device (3₁) of the one or more first downstream end-user recording devices (3₀).

16. A recording system according to claim 15, comprising a plurality of said first downstream end-user
recording devices, wherein the second recording device (3₁) comprises a downstream demand aggregator operable to, if the second recording device (3₁) receives upstream record requests for a particular media content section from two or more of the plurality of first recording devices, transmit the particular media content section to the said two or more first recording devices at substantially the same time.

17. A recording method according to one of claims 6 to 11, a recording device according to one of claims 12 to 14 or a system according to one of claims 15 to 16, wherein the current conditions represented by the recording status parameter comprise one or more of:
a bandwidth availability for the transmission of the media content (6),
a processing capacity of the downstream end-user recording device (3₀), or of the first (3₁) or second (3₂) upstream recording device,
a recording storage availability of the downstream end-user recording device (3₀), or of the first (3₁) or
second (3₂) upstream recording device, and a recording preference provided by an end-user or a network provider.

18. A recording method according to one of claims 6 to 11 or 17, a recording device according to one of claims 12 to 14 or 17, or a recording system according to one of claims 15 to 17, wherein the first part (5₁) comprises substantially all of the said transmission period (5), and/or wherein the portion (5₂) of the first part (5₁) comprises substantially all of the first part (5₁).

## Patentansprüche

1. Verfahren zum Aufzeichnen eines Medieninhalts (6), der während einer geplanten Übertragungsperiode (5) des Medieninhalts (6) über ein Netzwerk übertragen wird, wobei das Netzwerk einen stromaufwärtigen Medienserver (1) und eine hierarchische Anordnung von Aufzeichnungsvorrichtungen (3₀, 3₁, 3₂, 3ₙ), die in der Lage sind, den übertragenen Medieninhalt (6) aufzuzeichnen, umfasst, wobei der Medieninhalt von dem stromaufwärtigen Medieninhaltserver (1) an eine hierarchisch stromabwärtige Endbenutzer-Aufzeichnungsvorrichtung (3₀) übertragen wird, wobei das Verfahren umfasst:
einen ersten Schritt, bei dem die stromabwärtige Endbenutzer-Aufzeichnungsvorrichtung (3₀) eine Aufzeichnungsanweisung (8₀) empfängt, die den Medieninhalt (6) identifiziert und die stromabwärtige Endbenutzer-Aufzeichnungsvorrichtung (3₀) anweist, den Medieninhalt (6) während der geplanten Übertragungsperiode (5) aufzuzeichnen,
einen zweiten Schritt, bei dem:
ein Aufzeichnungssteuergerät (11) der stromabwärtigen Endbenutzer-Aufzeichnungsvorrichtung (3₀) zu oder vor dem Startzeitpunkt (t₀) der geplanten Übertragungsperiode und anschließend während des Aufzeichnungsvorgangs einen Aufzeichnungsstatusparameter der stromabwärtigen Endbenutzer-Aufzeichnungsvorrichtung (3₀) bestimmt, wobei der Aufzeichnungsstatusparameter die aktuellen Bedingungen der stromabwärtigen Endbenutzer-Aufzeichnungsvorrichtung (3₀) darstellt;
die stromabwärtige Endbenutzer-Aufzeichnungsvorrichtung (3₀) in Abhängigkeit von dem Aufzeichnungsstatusparameter eine erste stromaufwärtige Aufzeichnungsanweisung (8₁) generiert, die einen ersten Teil (5₁) der Übertragungsperiode (5), der hierarchisch stromaufwärts von der stromabwärtigen Endbenutzer-Aufzeichnungsvorrichtung aufzuzeichnen ist, identifiziert;
die stromabwärtige Endbenutzer-Aufzeichnungsvorrichtung (3₀) die erste stromaufwärtige Aufzeichnungsanweisung (8₁) an eine erste hierarchisch stromaufwärtige Aufzeichnungsvorrichtung (3₁) der stromabwärtigen Endbenutzer-Aufzeichnungsvorrichtung sendet, wobei die erste stromaufwärtige Aufzeichnungsanweisung (8₁) Identifizierungsinformationen des ersten Teils (5₁) der Übertragungsperiode (5) und eine Anweisung an die erste stromaufwärtige Aufzeichnungsvorrichtung (3₁), den übertragenen Medieninhalt (6) während des ersten Teils (5₁) der Übertragungsperiode (5) aufzuzeichnen, umfasst; und die aktuellen Bedingungen, die der Aufzeichnungsstatusparameter darstellt, eine Aufzeichnungsspeicherverfügbarkeit der Endbenutzer-Aufzeichnungsvorrichtung (3₀) umfassen.

2. Verfahren nach Anspruch 1, umfassend einen dritten Schritt, bei dem die stromabwärtige Endbenutzer-Aufzeichnungsvorrichtung (3₀) den übertragenen Medieninhalt (6) mindestens während eines zweiten Teils (5₀) der Übertragungsperiode (5), der nicht mit dem ersten Teil (5₁) der Übertragungsperiode zusammenfällt, aufzeichnet.

3. Verfahren nach Anspruch 1 oder Anspruch 2, umfassend einen vierten Schritt, bei dem die erste stromaufwärtige Aufzeichnungsvorrichtung (3₁) die erste stromaufwärtige Aufzeichnungsanweisung (8₁) von der stromabwärtigen Endbenutzer-Aufzeichnungsvorrichtung (3₀) empfängt und den Medieninhalt (6₁), der während des ersten Teils (5₁) der Übertragungsperiode (5) übertragen wird, aufzeichnet.

4. Verfahren nach einem der Ansprüche 1 bis 3, umfassend einen fünften Schritt, bei dem die erste stromaufwärtige Aufzeichnungsvorrichtung (3₁) eine zweite stromaufwärtige Aufzeichnungsanweisung (8₂) an eine zweite stromaufwärtige Aufzeichnungsvorrichtung (3₂) stromaufwärts von der ersten stromaufwärtigen Aufzeichnungsvorrichtung sendet, wobei die zweite stromaufwärtige Aufzeichnungsanweisung (8₂) Identifizierungsinformationen mindestens eines Abschnitts (5₂) des ersten Teils (5₁) der Übertragungsperiode (5) und eine Anweisung an die zweite stromaufwärtige Aufzeichnungsvorrichtung (3₂), den Medieninhalt (6₂), der während des Abschnitts (5₂) des ersten Teils (5₁) der Übertragungsperiode (5) übertragen wird, aufzuzeichnen, umfasst.

5. Verfahren nach einem der Ansprüche 1 bis 4, umfassend einen sechsten Schritt, bei dem die erste (3₁) oder die zweite (3₂) stromaufwärtige Aufzeichnungsvorrichtung oder eine hierarchisch weiter stromaufwärtige Aufzeichnungsvorrichtung (3ₙ) oder der stromaufwärtige Medieninhaltserver (1) den gesamten Medieninhalt (6) aufzeichnet, der während der geplanten Übertragungsperiode (5) übertragen wird.

6. Verfahren nach einem der Ansprüche 1 bis 5, wobei der zweite Schritt ein bedingter Schritt ist, der in Abhängigkeit von einem ersten Aufzeichnungsstatusparameter der stromabwärtigen Endbenutzer-Aufzeichnungsvorrichtung (3₀) ausgeführt wird, und/oder wobei der fünfte Schritt ein bedingter Schritt ist, der in Abhängigkeit von einem zweiten Aufzeichnungsstatusparameter der ersten stromaufwärtigen Aufzeichnungsvorrichtung (3₁) ausgeführt wird.

7. Verfahren nach einem der Ansprüche 1 bis 6, umfassend einen siebten Schritt, bei dem zu einem ersten Zeitpunkt nach dem Startzeitpunkt (t₁) des ersten Teils (5₁) der Übertragungsperiode (5) die stromabwärtige Endbenutzer-Aufzeichnungsvorrichtung (3₀) eine erste stromaufwärtige Inhaltsanfrage (9₁) an die erste stromaufwärtige Aufzeichnungsvorrichtung (3₁) sendet, die eine erste Medieninhaltsaufzeichnung (6₁) identifiziert, die während des ersten Teils (5₁) der Übertragungsperiode (5) aufgezeichnet wird.

8. Verfahren nach Anspruch 7, umfassend einen achten Schritt, bei dem zu einem zweiten Zeitpunkt nach dem Startzeitpunkt (t₃) des Abschnitts (5₂) des ersten Teils (5₁) der Übertragungsperiode (5) die erste stromaufwärtige Aufzeichnungsvorrichtung (3₁) eine zweite stromaufwärtige Inhaltsanfrage (9₂) an die zweite stromaufwärtige Aufzeichnungsvorrichtung (3₂, 3ₙ) sendet, die eine zweite Medieninhaltsaufzeichnung (6₂) identifiziert, die während des Abschnitts (5₂) des ersten Teils (5₁) der Übertragungsperiode (5) aufgezeichnet wird.

9. Verfahren nach einem der Ansprüche 7 und 8, umfassend einen neunten Schritt, bei dem die erste stromaufwärtige Aufzeichnungsvorrichtung (3₁) die erste Medieninhaltsaufzeichnung (6₁) an die stromabwärtige Endbenutzer-Aufzeichnungsvorrichtung (3₀) sendet, und/oder bei dem die zweite stromaufwärtige Aufzeichnungsvorrichtung (3₂, 3ₙ) die zweite Medieninhaltsaufzeichnung (6₂) an die stromabwärtige Endbenutzer-Aufzeichnungsvorrichtung (3₀) sendet.

10. Aufzeichnungsverfahren (3) nach einem der vorhergehenden Ansprüche, umfassend einen zehnten Schritt, bei dem die stromabwärtige Endbenutzer-Aufzeichnungsvorrichtung (3₀) und/oder die erste stromaufwärtige Aufzeichnungsvorrichtung (3₁) und/oder die zweite stromaufwärtige Aufzeichnungsvorrichtung (3₂) den Medieninhalt (6₀, 6₁, 6₂), der während der geplanten Übertragungsperiode (5) aufgezeichnet wird, in Abhängigkeit von einem Aufzeichnungsprioritätsparameter des Medieninhalts (6₀, 6₁, 6₂) löscht oder überschreibt.

11. Aufzeichnungsverfahren (3) nach Anspruch 10, wobei der Aufzeichnungsprioritätsparameter des aufgezeichneten Medieninhalts (6₀, 6₁, 6₂) in Abhängigkeit von einem oder mehreren Elementen bestimmt wird von:
einer verstrichenen Zeit seit dem Beginn (t₀) der Übertragungsperiode (5) des aufgezeichneten Medieninhalts (6),
einer verstrichenen Zeit seit dem Ende (tₑ) der Übertragungsperiode (5) des aufgezeichneten Medieninhalts (6₀, 6₁, 6₂),
einem Wiedergabewahrscheinlichkeitsparameter des aufgezeichneten Medieninhalts (6₀, 6₁, 6₂), wobei der Wiedergabewahrscheinlichkeitsparameter in Abhängigkeit von einem oder mehreren früheren Wiedergabemustern von zuvor aufgezeichneten Medieninhalten berechnet wird,
eine Aufzeichnungsspeicherplatzpräferenz, die von einem Benutzer oder einem Netzwerkbetreiber bereitgestellt wird,
einem Laufzeitparameter des aufgezeichneten Medieninhalts (6₀, 6₁, 6₂),
und einem Beliebheitsparameter des aufgezeichneten Medieninhalts (6₀, 6₁, 6₂).

12. Endbenutzer-Aufzeichnungsvorrichtung (3₀), die als Teil einer hierarchischen Anordnung von Aufzeichnungsvorrichtungen (3₀, 3₁, 3₂, 3ₙ) betriebsfähig ist, um Medieninhalt (6) aufzuzeichnen, der während einer geplanten Übertragungsperiode (5) von einem stromaufwärtigen Medieninhaltsserver (1) der Hierarchie übertragen wird, wobei die hierarchisch stromabwärtige Endbenutzer-Aufzeichnungsvorrichtung (3₀) betriebsfähig ist, um eine erste Aufzeichnungsanweisung (8₀) zu empfangen, welche die stromabwärtige Endbenutzer-Aufzeichnungsvorrichtung (3₀) anweist, den Medieninhalt (6) während der geplanten Übertragungsperiode (5) aufzunehmen, wobei die stromabwärtige Endbenutzer-Aufzeichnungsvorrichtung (3₀) **gekennzeichnet ist durch**:
Bestimmen zu oder vor dem Startzeitpunkt (t₀) der geplanten Übertragungsperiode, und anschließend während des Aufzeichnungsvorgangs, anhand eines Aufzeichnungssteuergeräts (11), eines Wertes eines Aufzeichnungsstatusparameters der stromabwärtigen Endbenutzer-Aufzeichnungsvorrichtung (3₀), wobei der Aufzeichnungsstatusparameter die aktuellen Bedingungen der stromabwärtigen Endbenutzer-Aufzeichnungsvorrichtung (3₀) darstellt; und
Generieren, in Abhängigkeit von dem Aufzeichnungsstatusparameter, einer stromaufwärtigen Aufzeichnungsanweisung (8₁), die einen ersten Teil (5₁) der stromaufwärts aufzuzeichnenden Übertragungsperiode (5) identifiziert, und Senden der stromaufwärtigen Aufzeichnungsanweisung (8₁) an eine erste stromaufwärtige Aufzeichnungsvorrichtung (3₁) der Hierarchie, wobei die aktuellen Bedingungen, die der Aufzeichnungsstatusparameter darstellt, eine Aufzeichnungsspeicherverfügbarkeit der stromabwärtigen Endbenutzer-Aufzeichnungsvorrichtung (3₀) umfassen.

13. Aufzeichnungsvorrichtung nach Anspruch 12, wobei die stromabwärtige Endbenutzer-Aufzeichnungsvorrichtung (3₀) betriebsfähig ist, um eine erste stromaufwärtige Inhaltsanfrage (9₁) an die erste stromaufwärtige Aufzeichnungsvorrichtung (3₁) zu senden, wobei die erste stromaufwärtige Inhaltsanfrage (9₁) eine erste stromaufwärtige Aufzeichnung (6₁) des ersten Medieninhalts (6₁), der während des ersten Teils (5₁) der Übertragungsperiode (5) aufgezeichnet wird, identifiziert.

14. Aufzeichnungsvorrichtung nach einem der Ansprüche 12 oder 13, wobei die stromabwärtige Endbenutzer-Aufzeichnungsvorrichtung (3₀) betriebsfähig ist, um in einem Abbildungszeigerspeicher (13, 22, 23) der Aufzeichnungsvorrichtung Abbildungszeigerinformationen (p1, p2, ...), die eine Abrufstelle der ersten stromaufwärtigen Aufzeichnung (6₁) identifizieren, zu speichern.

15. Aufzeichnungssystem, umfassend eine oder mehrere erste stromabwärtige Endbenutzer-Aufzeichnungsvorrichtungen nach einem der Ansprüche 12 bis 14 und eine zweite Aufzeichnungsvorrichtung nach einem der Ansprüche 12 bis 14, wobei die zweite Aufzeichnungsvorrichtung die erste stromaufwärtige Aufzeichnungsvorrichtung (3₁) der einen oder mehreren ersten stromabwärtigen Endbenutzer-Aufzeichnungsvorrichtungen (3₀) ist.

16. Aufzeichnungssystem nach Anspruch 15, umfassend eine Vielzahl der ersten stromabwärtigen Endbenutzer-Aufzeichnungsvorrichtungen, wobei die zweite Aufzeichnungsvorrichtung (3₁) einen stromabwärtigen Anfragenzusammensteller umfasst, der betriebsfähig ist, falls die zweite Aufzeichnungsvorrichtung (3₁) stromaufwärtige Aufzeichnungsanfragen für einen bestimmten Medieninhaltsbereich von zwei oder mehreren der Vielzahl von ersten Aufzeichnungsvorrichtungen empfängt, um den bestimmten Medieninhaltsbereich an die zwei oder mehreren ersten Aufzeichnungsvorrichtungen im Wesentlichen gleichzeitig zu übertragen.

17. Aufzeichnungsverfahren nach einem der Ansprüche 6 bis 11, Aufzeichnungsvorrichtung nach einem der Ansprüche 12 bis 14 oder System nach einem der Ansprüche 15 bis 16, wobei die aktuellen Bedingungen, die der Aufzeichnungsstatusparameter darstellt, eine oder mehrere umfassen von:
einer Bandbreitenverfügbarkeit für die Übertragung des Medieninhalts (6),
einer Verarbeitungskapazität der stromabwärtigen Endbenutzer-Aufzeichnungsvorrichtung (3₀) oder der ersten (3₁) oder zweiten (3₂) stromaufwärtigen Aufzeichnungsvorrichtung,
einer Aufzeichnungsspeicherverfügbarkeit der stromabwärtigen Endbenutzer-Aufzeichnungsvorrichtung (3₀) oder der ersten (3₁) oder zweiten (3₂) stromaufwärtigen Aufzeichnungsvorrichtung, und
einer Aufzeichnungspräferenz, die von einem Endbenutzer oder einem Netzwerkbetreiber bereitgestellt wird.

18. Aufzeichnungsverfahren nach einem der Ansprüche 6 bis 11 oder 17, Aufzeichnungsvorrichtung nach einem der Ansprüche 12 bis 14 oder 17 oder Aufzeichnungssystem nach einem der Ansprüche 15 bis 17, wobei der erste Teil (5₁) im Wesentlichen die gesamte Übertragungsperiode (5) umfasst, und/oder wobei der Abschnitt (5₂) des ersten Teils (5₁) im Wesentlichen den gesamten ersten Teil (5₁) umfasst.

## Revendications

1. Procédé d'enregistrement d'un contenu multimédia (6) transmis sur un réseau, pendant une période de transmission programmée (5) du contenu multimédia (6), le réseau comprenant un serveur multimédia en amont (1) et un agencement hiérarchique de dispositifs d'enregistrement (3₀, 3₁, 3₂, 3ₙ) capable d'enregistrer le contenu multimédia transmis (6), dans lequel le contenu multimédia est transmis depuis le serveur de contenu multimédia en amont (1) vers un dispositif d'enregistrement d'utilisateur final hiérarchiquement en aval (3₀) dans lequel le procédé comprend :
une première étape, dans laquelle le dispositif d'enregistrement d'utilisateur final en aval (3₀) reçoit une instruction d'enregistrement (8₀) identifiant le contenu multimédia (6) et ordonnant au dispositif d'enregistrement (3₀) de l'utilisateur final en aval d'enregistrer le contenu multimédia (6) pendant la période de transmission programmée (5),
une deuxième étape, dans laquelle :
un contrôleur d'enregistrement (11) de l'utilisateur final en aval détermine à ou avant l'heure de début (t₀) de la période de transmission programmée, et ensuite pendant l'opération d'enregistrement, un paramètre d'état d'enregistrement dudit dispositif d'enregistrement d'utilisateur final en aval (3₀) dans lequel le paramètre d'état d'enregistrement représente les conditions actuelles du dispositif d'enregistrement d'utilisateur final en aval (3₀) ;
le dispositif d'enregistrement d'utilisateur final en aval (3₀) génère, en fonction du paramètre d'état d'enregistrement, une première instruction d'enregistrement en amont (8₁) identifiant une première partie (5₁) de la période de transmission (5) à enregistrer hiérarchiquement en amont du dispositif d'enregistrement d'utilisateur final en aval,
le dispositif d'enregistrement d'utilisateur final en aval (3₀) envoie la première instruction d'enregistrement en amont (8₁) à un premier dispositif d'enregistrement hiérarchiquement en amont (3₁) du dispositif d'enregistrement d'utilisateur final en aval, dans lequel la première instruction d'enregistrement en amont (8₁) comprend des informations d'identification de la première partie (5₁) de la période de transmission (5) et une instruction au premier dispositif d'enregistrement en amont (3₁) pour enregistrer le contenu multimédia transmis (6) pendant la première partie (5₁) de la période de transmission (5); et les conditions actuelles représentées par le paramètre d'état d'enregistrement comprennent une disponibilité de mémorisation d'enregistrement du dispositif d'enregistrement d'utilisateur final (3₀).

2. Procédé selon la revendication 1, comprenant une troisième étape, dans laquelle le dispositif d'enregistrement d"utilisateur final en aval (3₀) enregistre le contenu multimédia transmis (6), au moins pendant une deuxième partie (5₀) de la période de transmission (5) qui ne coïncide pas avec la première partie (5₁) de la période de transmission.

3. Procédé selon la revendication 1 ou la revendication 2, comprenant une quatrième étape, dans laquelle le premier dispositif d'enregistrement en amont (3₁) reçoit la première instruction d'enregistrement en amont (8₁) du dispositif d'enregistrement d'utilisateur final en aval (3₀) et enregistre le contenu multimédia (6₁) transmis pendant la première partie (5₁) de la période de transmission (5).

4. Procédé selon une des revendications 1 à 3, comprenant une cinquième étape, dans laquelle le premier dispositif d'enregistrement en amont (3₁) envoie une deuxième enregistrement d'enregistrement en amont (8₂) à un deuxième dispositif d'enregistrement en amont (3₂), en amont du premier dispositif d'enregistrement en amont, dans lequel la deuxième instruction d'enregistrement amont (8₂) comprend des informations d'identification d'au moins une partie (5₂) de la première partie (5₁) de la période de transmission (5), et une instruction au deuxième dispositif d'enregistrement en amont (3₂) pour enregistrer le contenu multimédia (6₂) transmis pendant la partie (5₂) de la première partie (5₁) de la période de transmission (5).

5. Procédé selon une des revendications 1 à 4, comprenant une sixième étape, dans laquelle le premier (3₁) ou deuxième (3₂) dispositif d'enregistrement en amont, ou un dispositif d'enregistrement hiérarchiquement plus en amont (3ₙ), ou le serveur de contenu multimédia en amont (1), enregistre l'ensemble du contenu multimédia (6) transmis pendant la période de transmission programmée (5).

6. Procédé selon une des revendications 1 à 5, dans lequel la deuxième étape est une étape conditionnelle, réalisée en fonction d'un premier paramètre d'état d'enregistrement du dispositif d'enregistrement d'utilisateur final en aval (3₀), et/ou dans lequel la cinquième étape est une étape conditionnelle effectuée en fonction d'un deuxième paramètre d'état d'enregistrement du premier dispositif d'enregistrement en amont (3₁).

7. Procédé selon une des revendications 1 à 6, comprenant une septième étape dans laquelle, dans un premier instant, après l'instant de début (t₁) de la première partie (5₁) de la période d'émission (5), le dispositif d'enregistrement (3₀) d'utilisateur final en aval envoie une première demande de contenu en amont (9₁) au premier dispositif d'enregistrement en amont (3₁), identifiant un premier enregistrement de contenu multimédia (6₁) enregistré pendant la première partie (5₁) de la période de transmission (5).

8. Procédé selon la revendication 7, comprenant une huitième étape dans laquelle, à un deuxième instant, après l'instant de début (t₃) de la partie (5₂) de la première partie (5₁) de la période d'émission (5), le premier dispositif d'enregistrement en amont (3₁) envoie une deuxième demande de contenu en amont (9₂) au deuxième dispositif d'enregistrement en amont (3₂, 3ₙ), identifiant un deuxième enregistrement de contenu multimédia (6₂) enregistré pendant la partie (5₂) de la première partie (5₁) de la période de transmission (5).

9. Procédé selon une des revendications 7 et 8, comprenant une neuvième étape, dans laquelle le premier dispositif d'enregistrement en amont (3₁) transmet le premier enregistrement de contenu multimédia (6₁) au dispositif d'enregistrement utilisateur final en aval (3₀), et/ou dans lequel le deuxième dispositif d'enregistrement en amont (3₂, 3ₙ) transmet le deuxième enregistrement de contenu multimédia (6₂) au dispositif d'enregistrement d'utilisateur final en aval (3₀).

10. Procédé d'enregistrement (3) selon une des revendications précédentes, comprenant une dixième étape, au cours de laquelle le dispositif d'enregistrement d'utilisateur final en aval (3₀) et/ou le premier dispositif d'enregistrement en amont (3₁) et/ou le deuxième dispositif d'enregistrement en amont (3₂) supprime ou écrase un contenu multimédia (6₀, 6₁, 6₂) enregistré pendant la période de transmission programmée (5) en fonction d'un paramètre de priorité d'enregistrement du contenu multimédia (6₀, 6₁, 6₂).

11. Procédé d'enregistrement (3) selon la revendication 10, dans lequel le paramètre de priorité d'enregistrement du contenu multimédia enregistré (6₀, 6₁, 6₂) est déterminé en fonction d'un ou plusieurs parmi:
un temps écoulé depuis le début (t₀) de la période de transmission (5) du contenu multimédia enregistré (6),
un temps écoulé depuis la fin (tₑ) de la période de transmission (5) du contenu multimédia enregistré (6₀, 6₁ , 6₂),
un paramètre de probabilité de lecture du contenu multimédia enregistré (6₀, 6₁, 6₂), le paramètre de probabilité de lecture étant calculé en fonction d'un ou plusieurs modèles de lecture historiques de contenus multimédias enregistrés précédemment,
une préférence de mémorisation d'enregistrement fournie par un utilisateur ou un fournisseur de réseau,
un paramètre de durée du contenu multimédia enregistré (6₀, 6₁, 6₂), et un paramètre de popularité du contenu multimédia enregistré (6₀, 6₁, 6₂).

12. Dispositif d'enregistrement d'utilisateur final (3₀) utilisable, dans le cadre d'un agencement hiérarchique de dispositifs d'enregistrement (3₀, 3₁, 3₂, 3ₙ) pour enregistrer un contenu multimédia (6) transmis pendant une période de transmission programmée (5) par un serveur de contenu multimédia en amont (1) de la hiérarchie, dans lequel le dispositif d'enregistrement d'utilisateur final hiérarchiquement en aval (3₀) est utilisable pour recevoir une première instruction d'enregistrement (8₀), ordonnant au dispositif d'enregistrement d'utilisateur final en aval (3₀) d'enregistrer le contenu multimédia (6) pendant la période de transmission programmée (5), le dispositif d'enregistrement d'utilisateur final en aval (3₀) étant **caractérisé par** :
déterminer, à ou avant l'heure de début (t₀) de la période de transmission programmée, et ultérieurement pendant l'opération d'enregistrement, au moyen d'un contrôleur d'enregistrement (11), une valeur d'un paramètre d'état d'enregistrement du dispositif d'enregistrement d'utilisateur final en aval (3₀), dans lequel le paramètre d'état d'enregistrement représente les conditions actuelles du dispositif d'enregistrement d'utilisateur final en aval (3₀); et
générer, en fonction du paramètre d'état d'enregistrement, une instruction d'enregistrement en amont (8₁) identifiant une première partie (5₁) de la période de transmission (5) à enregistrer en amont, et pour transmettre l'instruction d'enregistrement en amont (8₁) à un premier dispositif d'enregistrement en amont (3₁) de la hiérarchie dans laquelle les conditions actuelles représentées par le paramètre d'état d'enregistrement comprennent une disponibilité de mémorisation d'enregistrement du dispositif d'enregistrement d'utilisateur final en aval (3₀).

13. Dispositif d'enregistrement selon la revendication 12, dans lequel le dispositif d'enregistrement d'utilisateur final en aval (3₀) est utilisable pour envoyer une première demande de contenu en amont (9₁) au premier dispositif d'enregistrement en amont (3₁), la première demande de contenu en amont (9₁) identifiant un premier enregistrement en amont (6₁) du premier contenu multimédia (6₁) enregistré pendant la première partie (5₁) de la période de transmission (5).

14. Dispositif d'enregistrement selon une des revendications 12 ou 13, dans lequel dispositif d'enregistrement d'utilisateur final en aval (3₀) est utilisable pour mémoriser, dans une mémoire de pointeur de mappage (13, 22, 23) du dispositif d'enregistrement, des informations de pointeur de mappage (p1, p2, ...) identifiant un emplacement de récupération du premier enregistrement en amont (6₁).

15. Système d'enregistrement comprenant un ou plusieurs premiers dispositifs d'enregistrement d'utilisateur final en aval selon une des revendications 12 à 14, et un deuxième dispositif d'enregistrement selon une des revendications 12 à 14, dans lequel le deuxième dispositif d'enregistrement est le premier dispositif d'enregistrement en amont (3₁) du ou des premiers dispositifs d'enregistrement d'utilisateur final en aval (3₀).

16. Système d'enregistrement selon la revendication 15, comprenant une pluralité desdits premiers dispositifs d'enregistrement d'utilisateur final en aval, dans lequel le deuxième dispositif d'enregistrement (3₁) comprend un agrégateur de demande en aval pouvant fonctionner, si le deuxième dispositif d'enregistrement (3₁) reçoit des demandes d'enregistrement en amont pour une section de contenu multimédia particulière provenant de deux ou plusieurs de la pluralité de premiers dispositifs d'enregistrement, pour transmettre la section de contenu multimédia particulière auxdits deux ou plusieurs premiers dispositifs d'enregistrement sensiblement en même temps.

17. Procédé d'enregistrement selon une des revendications 6 à 11, un dispositif d'enregistrement selon une des revendications 12 à 14 ou un système selon une des revendications 15 à 16, dans lequel les conditions actuelles représentées par le paramètre d'état d'enregistrement comprennent un ou plusieurs des éléments suivants :
une disponibilité de bande passante pour la transmission du contenu multimédia (6),
une capacité de traitement du dispositif d'enregistrement d'utilisateur final en aval (3₀), ou du premier (3₁) ou deuxième (3₂) dispositif d'enregistrement en amont,
une disponibilité de mémorisation d'enregistrement du dispositif d'enregistrement d'utilisateur final en aval (3₀), ou du premier (3₁) ou deuxième (3₂) dispositif d'enregistrement en amont, et une préférence d'enregistrement fournie par un utilisateur final ou un fournisseur de réseau.

18. Procédé d'enregistrement selon une des revendications 6 à 11 ou 17, un dispositif d'enregistrement selon une des revendications 12 à 14 ou 17, ou un système d'enregistrement selon une des revendications 15 à 17, dans lequel la première partie (5₁) comprend sensiblement la totalité de ladite période de transmission (5), et/ou dans lequel la partie (5₂) de la première partie (5₁) comprend sensiblement la totalité de la première partie (5₁).
